# FASCICULE DE BREVET EUROPEEN

(11) **EP 3 634 800 B1**
(45) Date de publication et mention de la délivrance du brevet: **26.03.2025**
(21) Numéro de dépôt: 18746129.8
(22) Date de dépôt: 20.07.2018
(51) Int. Cl.: B60K 11/08

(54) **DISPOSITIF D'OBTURATION D'ENTREE D'AIR DE VEHICULE AUTOMOBILE ET PROCEDE DE FABRICATION D'UN TEL DISPOSITIF D'OBTURATION**
VORRICHTUNG ZUM VERSCHLIESSEN EINES LUFTEINLASSES EINES KRAFTFAHRZEUGS UND VERFAHREN ZUR HERSTELLUNG EINER SOLCHEN VERSCHLUSSVORRICHTUNG
DEVICE FOR CLOSING AN AIR INTAKE OF A MOTOR VEHICLE AND METHOD FOR MANUFACTURING SUCH A CLOSING DEVICE

(30) Priorité: 28.07.2017 FR 1757188
(43) Date de publication de la demande: 15.04.2020
(73) Titulaire: Valeo Systemes Thermiques, 78322 Le Mesnil Saint-Denis Cedex (FR)
(72) Inventeur: GERBER, Sylvain, 78322 Le Mesnil Saint Denis Cedex (FR); MITIDIERI, Enzo, 78322 Le Mesnil Saint Denis Cedex (FR)
(74) Mandataire: Valeo Systèmes Thermiques
(86) Numéro de dépôt international: PCT/EP2018/069743
(87) Numéro de publication internationale: WO 2019/020510

(56) Documents cités:
- EP-A1- 2 641 768
- WO-A1-2012/160065
- DE-A1- 102010 002 373
- US-A1- 2014 342 656

## Description

La présente invention concerne les dispositifs d'obturation et plus précisément un dispositif d'obturation d'entrée d'air de face avant de véhicule automobile ainsi que son procédé de fabrication.

Les faces avant de véhicules automobiles sont généralement composées de deux entrées d'air principales, dites voie haute et voie basse, séparées par une poutre pare-choc. Derrière cette poutre pare-choc, sont généralement placés des échangeurs de chaleur du véhicule automobile, comme par exemple celui utilisé pour la climatisation de l'habitacle et/ou encore celui utilisé pour le refroidissement du moteur.

Il est également connu de disposer, dans le trajet d'air passant par les entrées d'air principales, et plus généralement la voie basse, un cadre support comportant une multiplicité de volets montés pivotants autour d'axes parallèles et propres à prendre une multiplicité de positions angulaires différentes, comprises entre une position d'ouverture et une position d'obturation, sous l'action de moyens de commande appropriés, formant ainsi un dispositif d'obturation s'apparentant à une jalousie. Ce dispositif d'obturation est parfois appelé obturateur actif de calandre, ou encore module d'entrée d'air piloté. Un tel dispositif d'obturation peut également être désigné par l'acronyme AGS (pour « Active Grille Shutter » en anglais).

Le dispositif d'obturation permet d'ajuster le débit d'air traversant les entrées d'air et arrivant aux échangeurs de chaleur. Il est ainsi possible d'optimiser l'efficacité de ces échangeurs de chaleur en fonction des besoins en faisant varier la quantité d'air qu'ils reçoivent. De plus, à grande vitesse, les volets en position d'obturation permettent de diminuer le coefficient de traînée du véhicule automobile et ainsi améliorent l'aérodynamisme dudit véhicule automobile. Le dispositif d'obturation permet donc de réduire la consommation d'énergie et la pollution lorsque le moteur n'a pas besoin d'être refroidi par l'air extérieur.

Le dispositif d'obturation comprend de manière conventionnelle un actionneur (également appelé actuateur ou moteur) commandant les volets et permettant l'ouverture ou la fermeture de l'entrée d'air: les volets sont ouverts lorsque le moteur du véhicule automobile a besoin d'être refroidi et les volets sont fermés lorsque le moteur du véhicule automobile est suffisamment refroidi.

On connaît de l'art antérieur des logements disposés sur le cadre support destinés à accueillir l'actionneur. Cependant, l'actionneur est installé et maintenu à l'intérieur de ce logement à l'aide de vis de fixation. De telles vis de fixation sont des composants additionnels du dispositif d'obturation. Par ailleurs, l'utilisation de ces vis de fixation nécessite une étape spécifique d'assemblage lors du procédé de fabrication du dispositif d'obturation, cette étape spécifique augmente donc le temps de fabrication de ce dispositif d'obturation et présente donc un coût. D'autre part, au cours du procédé de fabrication de ce dispositif d'obturation, il est possible de rencontrer des problèmes liés à la course de vissage, ou encore au vissage de ces vis de fixation, pouvant entraîner des vices de fabrication du dispositif d'obturation, nécessitant la mise au rebut de ce dispositif d'obturation. De plus, de telles vis de fixation peuvent se désolidariser du cadre support à cause des vibrations par exemple que le dispositif d'obturation peut être amené à subir lors du fonctionnement du véhicule automobile. Cette désolidarisation peut nuire au bon fonctionnement du dispositif d'obturation et peut endommager l'actionneur.

L'art antérieur montre encore dans les documents EP2641768A1 et US2014/342656A1 d'autres dispositifs d'obturation d'entrée de face avant de véhicule présentant un logement pour recevoir un actionneur de volets.

Un des objectifs de la présente invention est donc de remédier au moins partiellement aux inconvénients de l'art antérieur énoncés ci-dessus.

Un autre objectif de la présente invention, différent de l'objectif précédent est de proposer un dispositif d'obturation permettant l'installation de l'actionneur sans nécessiter l'utilisation de vis de fixation.

Un autre objectif de la présente invention, différent des objectifs précédents, est de proposer un procédé de fabrication d'un dispositif d'obturation présentant un coût moindre.

La présente invention concerne donc un dispositif d'obturation d'entrée d'air de face avant de véhicule automobile comprenant :
- un cadre support présentant deux montants latéraux reliés entre eux par deux traverses d'extrémité et dans lequel est installé au moins un ensemble de volets pivotants entre une position d'obturation et une position ouverte,
- au moins un élément de commande configuré pour piloter le positionnement des volets, ledit au moins un élément de commande comportant au moins un organe de commande relié aux volets, un actionneur présentant des orifices de fixation, et un levier relié d'une part à l'actionneur et d'autre part à l'organe de commande de manière à permettre le pivotement des volets,

- un logement disposé sur le cadre support configuré pour recevoir l'actionneur, ledit logement présentant une ouverture, et
- un capot venant recouvrir l'ouverture du logement et étant fixé sur le logement,
le logement présente des éléments de positionnement, destinés à s'insérer dans les orifices de fixation, chaque élément de positionnement présentant une première extrémité reliée au logement et une deuxième extrémité libre configurée pour coopérer avec l'orifice de fixation de l'actionneur, et le capot présente au moins une forme spécifique configurée pour maintenir fixe l'actionneur par rapport à la première extrémité des éléments de positionnement lors de la fixation du capot sur le logement.

Autrement dit, la deuxième extrémité libre est configurée pour coopérer avec l'orifice de fixation de l'actionneur, à savoir la deuxième extrémité libre traverse, ou passe au travers de, l'orifice de fixation de l'actionneur. Une telle coopération permet un meilleur maintien de l'actionneur sur le logement.

La coopération des éléments de positionnement du logement avec les orifices de fixation de l'actionneur permet l'installation de l'actionneur dans le logement sans nécessiter l'utilisation de vis de fixation. Par ailleurs, l'au moins une forme spécifique présente sur le capot permet de maintenir l'actionneur en place dans le logement.

Le dispositif peut comprendre en outre une ou plusieurs des caractéristiques suivantes prises seules ou en combinaison.

Selon une première variante ne faisant pas partie de l'invention, l'ouverture du logement est disposée sur la face avant du cadre support et s'étend perpendiculairement à l'axe des traverses d'extrémité.

Selon une deuxième variante ne faisant pas partie de l'invention, l'ouverture du logement est disposée sur la face arrière du cadre support et s'étend perpendiculairement à l'axe des traverses d'extrémité.

Selon un aspect de ces première et deuxième variantes, le logement est disposé sur un montant latéral du cadre support.

Selon un autre aspect de ces première et deuxième variantes, le cadre support présente en outre un montant disposé entre les deux montants latéraux, ledit montant présentant le logement.

Selon l'invention, le logement est disposé sur un montant latéral et s'étend parallèlement à l'axe des traverses d'extrémité.

Selon un aspect de l'invention, éléments de positionnement correspondent à des doigts présentant une butée configurée pour servir d'appui à une première surface de l'orifice de fixation de l'actionneur.

Les doigts peuvent être évasés en direction de la première extrémité de l'élément de positionnement.

Selon un premier mode de réalisation, le positionnement du capot sur l'ouverture du logement en vue de sa fixation se fait selon une direction parallèle aux éléments de positionnement.

L'au moins une forme spécifique correspond à un orifice borgne configuré pour accueillir la deuxième extrémité d'un élément de positionnement, le capot comportant autant d'orifices borgnes que le logement présente d'éléments de positionnement.

Selon un aspect, les orifices borgnes présentent une forme cylindrique ou de section elliptique.

L'orifice borgne présente une extrémité libre coopérant avec une deuxième surface de l'orifice de fixation, ladite deuxième surface étant opposée à la première surface, de manière à ce que la première surface de l'orifice de fixation vienne au contact de la butée lors de la fixation du capot sur l'ouverture du logement.

Selon une variante, l'extrémité libre des orifices borgnes peut présenter une cale en matériau élastomère configurée pour absorber les chocs et les vibrations.

De manière optionnelle, le capot peut présenter un retrait de matière configuré pour recevoir une mousse destinée à venir en appui sur l'actionneur à l'état monté du capot sur l'ouverture du logement.

Selon un deuxième mode de réalisation, le positionnement du capot sur l'ouverture du logement en vue de sa fixation se fait selon une direction perpendiculaire aux éléments de positionnement, et de préférence perpendiculairement au plan défini par le cadre support.

Selon le premier ou le deuxième mode de réalisation, l'au moins une forme spécifique correspond à une nervure venant contre une face externe de l'actionneur disposée en regard du capot à l'état monté du capot sur l'ouverture du logement de sorte à plaquer l'actionneur dans le logement lors de la fixation du capot sur l'ouverture du logement.

Selon une variante, le capot peut présenter des joues semi-sphériques destinées à venir recouvrir une partie extrémale des volets afin de former une barrière de protection permettant de limiter les quantités de poussières et de débris qui peuvent arriver au niveau de cette partie extrémale des volets.

La nervure est chanfreinée de manière à appuyer sur l'actionneur pour le plaquer dans le logement en fin de course du capot lors de l'encliquetage du capot sur l'ouverture du logement.

Selon un aspect, la nervure est disposée sur le capot de manière à venir appuyer au centre de l'actionneur lors de l'encliquetage du capot sur l'ouverture du logement.

Selon un autre aspect, le capot présente au moins deux nervures destinées à coopérer avec l'actionneur.

La fixation du capot sur l'ouverture du logement se fait par encliquetage.

La présente invention a également pour objet un procédé de fabrication d'un dispositif d'obturation tel que défini précédemment, le procédé comprend les étapes suivantes :
- installation de l'actionneur muni du levier dans le logement par coopération des orifices de fixation de l'actionneur avec les éléments de positionnement, et
- blocage de l'actionneur à l'intérieur du logement par fixation du capot sur l'ouverture du logement.

D'autres caractéristiques et avantages de la présente invention apparaîtront plus clairement à la lecture de la description suivante, donnée à titre illustratif et non limitatif et des dessins annexés dans lesquels :
- la figure 1 est une représentation schématique en perspective d'un dispositif d'obturation ne faisant par partie de l'invention,
- la figure 2 est une représentation schématique en perspective d'un dispositif d'obturation selon l'invention,
- la figure 3A est une représentation schématique de face d'un actionneur,
- la figure 3B est une représentation schématique en perspective de l'actionneur de la figure 3A,
- la figure 4A est une représentation schématique en perspective d'un logement du dispositif d'obturation,
- la figure 4B est une représentation schématique du logement de la figure 4A logeant un actionneur
- la figure 5A est une représentation schématique partielle en perspective du dispositif d'obturation de la figure 2 selon une première variante,
- la figure 5B est une représentation schématique en perspective d'un capot du dispositif d'obturation de la figure 4A,
- la figure 6A est une représentation schématique partielle en perspective d'un dispositif d'obturation selon une deuxième variante,
- la figure 6B est une représentation schématique en perspective d'un logement du dispositif d'obturation de la figure 6A logeant un actionneur,
- la figure 6C est une représentation schématique en perspective d'un capot du dispositif d'obturation de la figure 5A,
- la figure 7A est une représentation schématique partielle en perspective d'un dispositif d'obturation selon une troisième variante,
- la figure 7B est une représentation schématique en perspective d'un logement du dispositif d'obturation de la figure 7A logeant un actionneur, et
- la figure 7C est une représentation schématique en perspective d'un capot du dispositif d'obturation de la figure 7A.

Sur ces figures, les éléments identiques portent les mêmes références numériques.

Les réalisations suivantes sont des exemples.

Dans la description suivante, il est fait référence à une première et une deuxième surfaces des orifices de fixation et à une première et une deuxième extrémités des éléments de positionnement. Il s'agit d'un simple indexage pour différencier et dénommer des éléments proches mais non identiques. Cette indexation n'implique pas une priorité d'un élément par rapport à un autre et on peut aisément interchanger de telles dénominations sans sortir du cadre de la présente description. Cette indexation n'implique pas non plus un ordre dans le temps par exemple pour apprécier la structure du dispositif d'obturation, ou encore l'agencement ou la coopération des différents éléments le constituant.

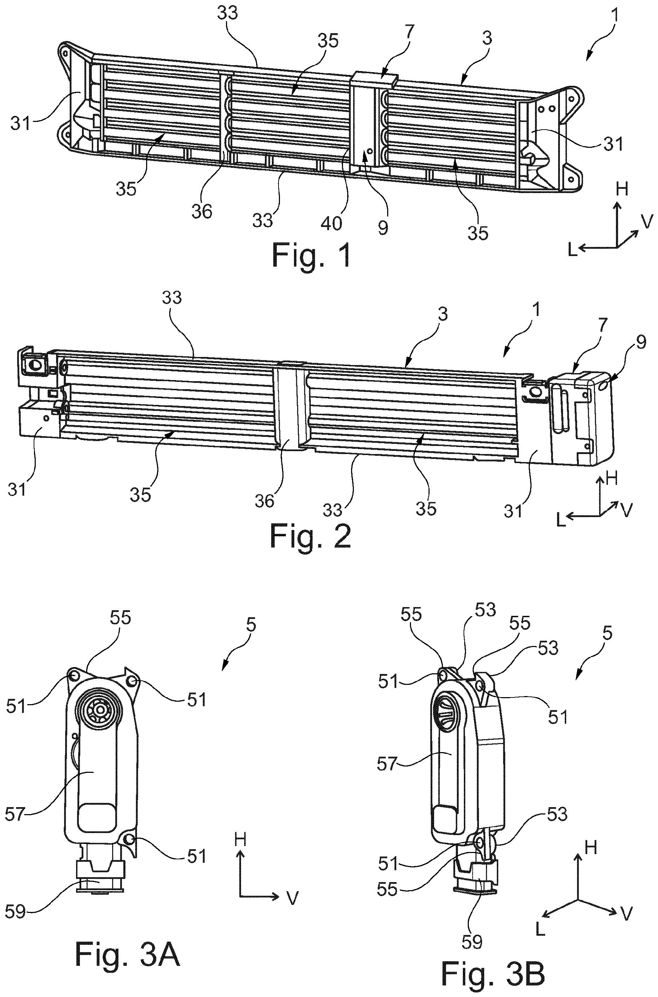

Dans la description suivante, on se réfère à une orientation en fonction des axes Longitudinaux, Verticaux et définissant une Hauteur tels que définis arbitrairement par le trièdre H, L, V, notamment représenté sur les figures 1, 2 et 3B à 6D. Le choix des appellations de ces axes n'est pas limitatif de l'orientation que peut prendre le dispositif d'obturation dans son application à un véhicule automobile.

Par ailleurs, on entend par « face avant du cadre support » dans la description suivante, la partie du cadre support disposée en premier dans le flux d'air traversant le dispositif d'obturation en fonctionnement normal du véhicule automobile. De même, on entend par « face arrière du cadre support », la partie du cadre support opposée à la face avant du cadre support.

En référence aux figures 1 et 2, il est représenté un dispositif d'obturation 1 d'entrée d'air de face avant de véhicule automobile ne faisant pas partie de l'invention (figure 1) et un dispositif d'obturation d'entrée d'air de face avant de véhicule automobile selon l'invention (figure 2).

Le dispositif d'obturation 1 comprend un cadre support 3. Le cadre support 3 présente deux montants latéraux 31 reliés entre eux par deux traverses d'extrémité 33 définissant une ouverture. Par ailleurs, le cadre support 3 présente une face avant et une face arrière. De plus, au moins un ensemble de volets 35 est installé dans le cadre support 3, et plus particulièrement dans l'ouverture définie par les montants latéraux 31 et les traverses d'extrémité 33. Les volets composant l'au moins un ensemble de volets 35 sont installés pivotants entre une position d'obturation dans laquelle ils s'opposent au passage du flux d'air à travers le dispositif d'obturation 1 et une position ouverte dans laquelle ils permettent le passage du flux d'air à travers le dispositif d'obturation 1. Par ailleurs, le cadre support 3 peut présenter de manière optionnelle un ou plusieurs éléments de renfort 36 des volets disposés entre les montants latéraux 31 et parallèlement à ces montants latéraux 31. Ces éléments de renfort 36 sont disposés entre deux ensembles de volets 35. Ces éléments de renfort 36 permettent de prévenir la flexion des volets par exemple sous l'effet de la pression du flux d'air exercée sur ceux-ci par exemple. Par ailleurs, les éléments de renfort 36 peuvent servir d'appui aux volets pour leur rotation. Les dispositifs d'obturation 1 représentés en référence aux figures 1 et 2 présentent chacun un seul élément de renfort 36, mais un nombre supérieur d'éléments de renfort 36 peut être prévu.

D'autre part, le dispositif d'obturation 1 comprend au moins un élément de commande configuré pour piloter le positionnement des volets. L'au moins un élément de commande comporte au moins un organe de commande (non représenté), par exemple une bielle, relié aux volets, un actionneur 5 (visible sur les figures 3A et 3B), et un levier (non représenté) relié d'une part à l'actionneur 5 et d'autre part à l'organe de commande de manière à permettre le pivotement des volets de l'ensemble de volets 35.

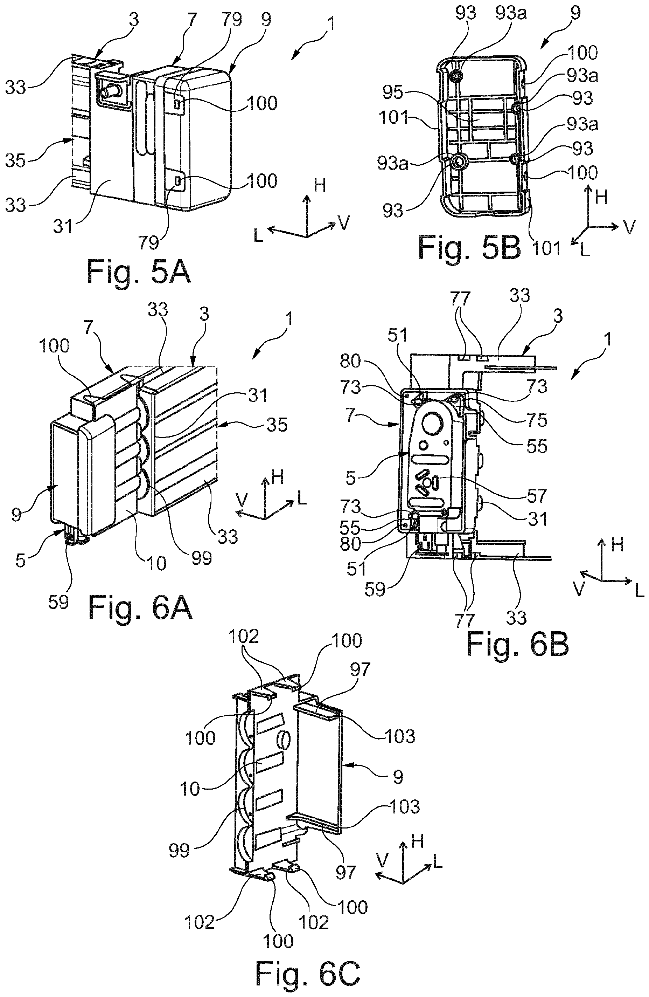

Le dispositif d'obturation 1 comprend également un logement 7 disposé sur le cadre support 3. Le logement 7 est configuré pour recevoir l'actionneur 5 et l'organe de commande. Par ailleurs, le logement 7 présente une ouverture recouverte par un capot 9 (notamment visible sur les figures 5A, 6A et 7A). Selon les modes de réalisation particuliers des figures 1 et 2, le logement 7 vient de matière avec le cadre support 3. Plus particulièrement, le logement 7 est moulé avec le cadre support 3 afin de limiter la présence de jointures pouvant éventuellement former des zones de fragilité.

D'autre part le capot 9 est fixé sur le logement 7 par tout moyen connu de l'homme de l'art. Selon les modes de réalisation particuliers représentés en référence aux figures 1 et 2, la coopération entre le capot 9 et le logement 7 se fait par encliquetage. Avantageusement, la fixation par encliquetage du capot 9 sur le logement 7 permet de prévenir la désolidarisation de ces éléments liée aux vibrations lors du fonctionnement du véhicule automobile.

Selon la figure 1, le dispositif d'obturation 1 présente trois ensembles de volets 35 dont deux sont disposés de part et d'autre de l'élément de commande et donc du logement 7. Selon ce premier mode de réalisation, l'ouverture du logement 7 est disposée sur la face avant du cadre support 3 et le logement 7 s'étend perpendiculairement à l'axe longitudinal des traverses d'extrémité 33, c'est-à-dire selon l'axe V du trièdre. Plus précisément le logement 7 est installé sur un montant 40 disposé entre les deux montants latéraux 31. Ainsi, l'élément de commande peut entraîner les trois ensembles de volets 35 du dispositif d'obturation 1. Avantageusement, la disposition sur la face avant du logement 7 permet d'utiliser un système de fixation du capot 9 moins fort, comme par exemple par encliquetage, car celui-ci est poussé sur le cadre support 3 par le flux d'air lors du fonctionnement du véhicule automobile.

Selon une variante non représentée ici du dispositif de la figure 1, l'ouverture du logement 7 peut être disposée sur un montant latéral 31 du cadre support 3 et le logement 7 s'étend perpendiculairement à l'axe longitudinal des traverses d'extrémité 33, c'est-à-dire selon l'axe V du trièdre. Selon cette variante, le dispositif d'obturation 1 présente un seul ensemble de volets 35 pivotants.

Selon une autre variante non représentée, l'ouverture du logement 7 peut être disposée sur la face arrière du cadre support 3 et le logement 7 s'étend perpendiculairement à l'axe des traverses d'extrémité 33, c'est-à-dire selon l'axe V du trièdre. Selon cette autre variante, le logement 7 peut être disposé aussi bien au niveau du montant 40 intermédiaire qu'au niveau d'un montant latéral 31 du cadre support 3. Ainsi, le dispositif d'obturation 1 selon cette autre variante peut présenter un ou deux ensembles de volets 35 pivotants selon l'endroit où est installé le logement 7.

Selon le mode de réalisation représenté en référence à la figure 2, l'ouverture du logement 7 est disposée sur un montant latéral 31 et le logement 7 s'étend dans le prolongement des traverses d'extrémité 33, c'est-à-dire parallèlement à l'axe L du trièdre. Selon ce deuxième mode de réalisation, l'élément de commande pilote un seul ensemble de volets 5.

En référence aux figures 3A et 3B, il est représenté l'actionneur 5 destiné à être installé dans le logement 7 afin de piloter l'ensemble de volets 35. L'actionneur 5 présente des orifices de fixation 51, et plus particulièrement selon ce mode de réalisation trois orifices de fixation 51. La présence de trois orifices de fixation 51 permet de positionner l'actionneur dans le logement 7 et également de le maintenir fixe selon les différentes directions de l'espace lorsque le capot 9 recouvre l'ouverture du logement 7. Cependant, l'actionneur 5 peut présenter un nombre différent d'orifices de fixations 51, comme par exemple deux, quatre ou plus. Les orifices de fixations 51 présentent une première surface 53 destinée à être positionnée en regard du logement 7 lorsque l'actionneur 5 est installé sur le cadre support 3 et une deuxième surface 55 opposée à la première surface 53. Par ailleurs, l'actionneur 5 présente une face externe 57 destinée à être disposée en regard du capot 9 lorsque ce capot recouvre l'ouverture du logement 7. D'autre part, l'actionneur 5 présente également une fiche de connexion 59 destinée à être reliée à une unité de contrôle (non représentée) permettant d'alimenter électriquement l'actionneur 5 ou encore de piloter le positionnement des volets lors du fonctionnement du véhicule automobile selon la nécessité de refroidir le moteur par exemple.

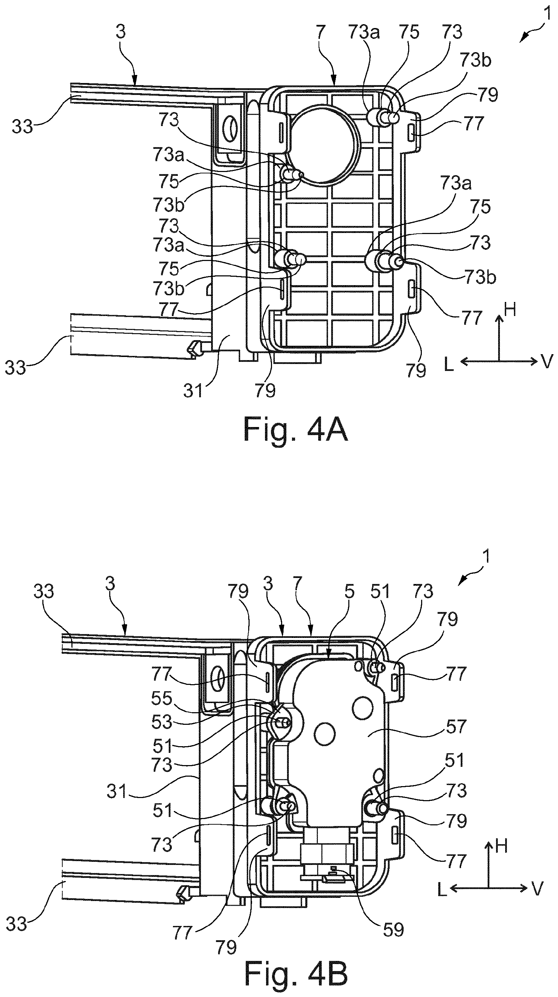

En référence aux figures 4A à 7C, il est représenté plus en détail le logement 7 (notamment aux figures 4A, 4B, 6B et 7B) et le capot 9 (notamment aux figures 5B, 6C et 7C), ainsi que le coopération de l'actionneur 5 avec le logement 7 (figures 4B, 6B, et 7B) selon différents modes de réalisation particuliers.

Le logement 7 présente des éléments de positionnement 73, destinés à s'insérer dans les orifices de fixation 51 de l'actionneur. 5 Ainsi, ces éléments de positionnement 73 permettent de centrer l'actionneur 5 à l'intérieur du logement 7 et de bloquer les mouvements de cet actionneur 5 selon les axes V et H du trièdre. Chaque élément de positionnement 73 présente une première extrémité 73a reliée au logement 7 et une deuxième extrémité 73b libre configurée pour coopérer avec l'orifice de fixation 51. Plus particulièrement selon ces modes de réalisation, les éléments de positionnement 73 correspondent à des doigts présentant une butée 75, notamment illustrée sur la figure 4A, configurée pour servir d'appui à la première surface 53 de l'orifice de fixation 51. La première surface 53 de l'orifice de fixation 51 est disposée en regard de la première extrémité 73a de l'élément de positionnement 73 comme illustré en référence aux figures 4B, 6B et 7B. Selon ces modes de réalisation particuliers, les doigts sont évasés en direction de la première extrémité 73a de l'élément de positionnement 73. Avantageusement, la présence de ces éléments de positionnement 73 permet de s'affranchir de l'utilisation de vis de fixation afin de permettre l'installation de l'actionneur 5 dans le logement 7 lorsque l'ouverture du logement 7 est recouverte par le capot 9. De plus, les éléments de positionnement 73 peuvent absorber le couple de l'actionneur 5 lorsque celui-ci pivote les volets de l'ensemble de volets 35.

Le capot 9 (visible sur les figures 5B, 6C et 7C) présente au moins une forme spécifique 93, 97 configurée pour maintenir fixe l'actionneur 5 par rapport à la première extrémité 73a des éléments de positionnement 73 lors de la fixation du capot 9 sur le logement 7, et plus particulièrement lors de l'encliquetage du capot 9 selon les différents modes de réalisation représentés ici. Ainsi, lors de l'encliquetage du capot 9 sur le logement, l'actionneur 5 est maintenu contre les butées 75, et plus précisément la première surface 53 des orifices de fixation 51, et ses déplacements dans les différentes directions de l'espace peuvent être prévenus, ce qui permet de maintenir l'actionneur 5 fixe sans nécessiter l'utilisation de vis de fixation.

En référence aux figures 4A à 5B, il est représenté une première variante du dispositif d'obturation 1. Selon cette première variante, l'encliquetage du capot 9 sur l'ouverture du logement 7 se fait selon une direction parallèle aux éléments de positionnement 73, et plus particulièrement selon l'axe L du trièdre. Par ailleurs, l'actionneur 5 est disposé sur un montant latéral 31 du cadre support 3 et entraîne en pivotement un seul ensemble de volets 35, le dispositif d'obturation 1 correspond donc au dispositif d'obturation 1 représenté en référence à la figure 2.

En référence à la figure 4A, le logement 7 présente quatre éléments de positionnement 73 de l'actionneur. Ainsi, l'actionneur 5 comporte, selon ce mode de réalisation particulier, quatre orifices de fixation 51 destinés à coopérer avec ces quatre éléments de positionnement 73 comme cela est représenté en référence à la figure 4B. La présence des quatre éléments de positionnement 73 permet de centrer l'actionneur 5 et de prévenir ses déplacements éventuels selon les différentes directions de l'espace. Par ailleurs, le couple de l'actionneur 5 peut être réparti sur les différents éléments de positionnement 73, ce qui permet de prévenir une fatigue éventuelle des éléments de positionnement 73 pouvant créer des fragilités, voire une rupture de ces éléments de positionnement 73.

En référence aux figures 4A à 5B, le logement 7 présente des ouvertures 77 destinées à coopérer avec des formes complémentaires 100 portées par le capot 9 afin de permettre la coopération du capot 9 avec le logement 7 par encliquetage, et donc la fixation du capot 9 sur l'ouverture du logement 7. Les ouvertures 77 sont disposées sur des pattes de fixation 79 s'étendant dans le prolongement de l'ouverture logeant l'actionneur 5. Le capot 9 présente quant à lui les formes complémentaires 100 (visibles sur la figure 5B) disposées au niveau de sa périphérie. Plus précisément, le logement 7 présente quatre pattes de fixation 79 s'étendant parallèlement à l'axe longitudinal des traverses d'extrémité 33, c'est-à-dire parallèlement à l'axe L du trièdre. D'autre part, les pattes de fixation 79 sont disposés selon la hauteur du cadre support 3, c'est-à-dire selon l'axe H du trièdre. Les formes complémentaires 100 sont disposées quant à elles sur des parois latérales 101 du capot 9.

En référence à la figure 5B, l'au moins une forme spécifique correspond à un orifice borgne 93 configuré pour accueillir la deuxième extrémité 73b d'un élément de positionnement 73. Selon le mode de réalisation particulier représenté ici, le capot 9 comporte quatre orifices borgnes 93 destinés à coopérer avec les quatre éléments de positionnement 73.

Selon d'autres modes de réalisation non représentés ici, le capot 9 peut présenter un nombre différent d'orifices borgnes 93. D'une manière plus générale, le capot 9 comporte autant d'orifices borgnes 93 que le logement 7 présente d'éléments de positionnement 73. En effet, la coopération des orifices borgnes 93 avec les éléments de positionnement 73 permet de centrer le capot 9 sur l'ouverture du logement 7 et également de maintenir l'actionneur 5 fixe dans le logement 7.

Par ailleurs selon le mode de réalisation particulier de la figure 5B, les orifices borgnes 93 peuvent présenter une forme cylindrique ou de section elliptique destinée à accueillir au moins la deuxième extrémité 73b des éléments de positionnement 73. Selon cette première variante, chaque orifice borgne 93 présente une extrémité libre 93a coopérant avec la deuxième surface 55 de l'orifice de fixation 51 de manière à ce que la première surface 53 de l'orifice de fixation 51 vienne au contact de la butée 75 lors de la fixation par encliquetage du capot 9 sur l'ouverture, permettant ainsi de maintenir fixe l'actionneur 5 à l'intérieur du logement 7. De manière optionnelle, l'extrémité libre 93a des orifices borgnes 93 peut présenter une cale en matériau élastomère par exemple configurée pour absorber les chocs et les vibrations que le dispositif d'obturation 1 peut être amené à subir au cours du fonctionnement du véhicule automobile afin de limiter la fatigue des éléments de positionnement 73.

De manière optionnelle, comme représenté en référence à la figure 5B, le capot 9 peut présenter un retrait de matière 95 configuré pour recevoir une mousse destinée à venir en appui sur la face externe 57 de l'actionneur 5 à l'état monté du capot 9 sur l'ouverture du logement 7. La présence de cette mousse disposée dans le capot 9 permet de renforcer le maintien en position de l'actionneur 5 à l'intérieur du logement 7 car cette mousse pousse l'actionneur 5 contre les butées 75 portées par les éléments de positionnement 73. Selon un mode de réalisation non représenté ici, le maintien en place de l'actionneur 5 à l'intérieur du logement 7 peut être assuré directement par la mousse. Ainsi, la présence des orifices borgnes 93 peut ne pas être nécessaire.

En variante ou en complément selon une alternative non représentée ici, l'au moins une forme spécifique peut correspondre à une nervure venant en appui sur la face externe 57 de l'actionneur 5 à l'état monté du capot 9 sur l'ouverture du logement 7 de sorte à plaquer l'actionneur 5 dans le logement 7 lors de l'encliquetage du capot 9 avec le logement 7.

D'autre part, en référence à la figure 5A, le logement 7 et le capot 9 à l'état assemblé présentent une encoche (non représentée) afin de permettre le passage d'un câble de connexion (non représenté) permettant de relier la fiche de connexion 59 de l'actionneur 5 à l'unité de contrôle.

Selon un autre mode de réalisation non représenté ici, cette première variante peut être utilisée sur le dispositif d'obturation 1 de la figure 1, c'est-à-dire lorsque le logement 7 s'étend perpendiculairement à l'axe longitudinal de traverses d'extrémité 33, donc selon l'axe V du trièdre. Selon cet autre mode de réalisation, le logement 7 peut être disposé aussi bien au niveau d'un montant latéral 31 que d'un montant 40 disposé entre les deux montants latéraux 31. Par ailleurs, le logement 7 peut être disposé sur la face avant ou sur la face arrière du cadre support 3.

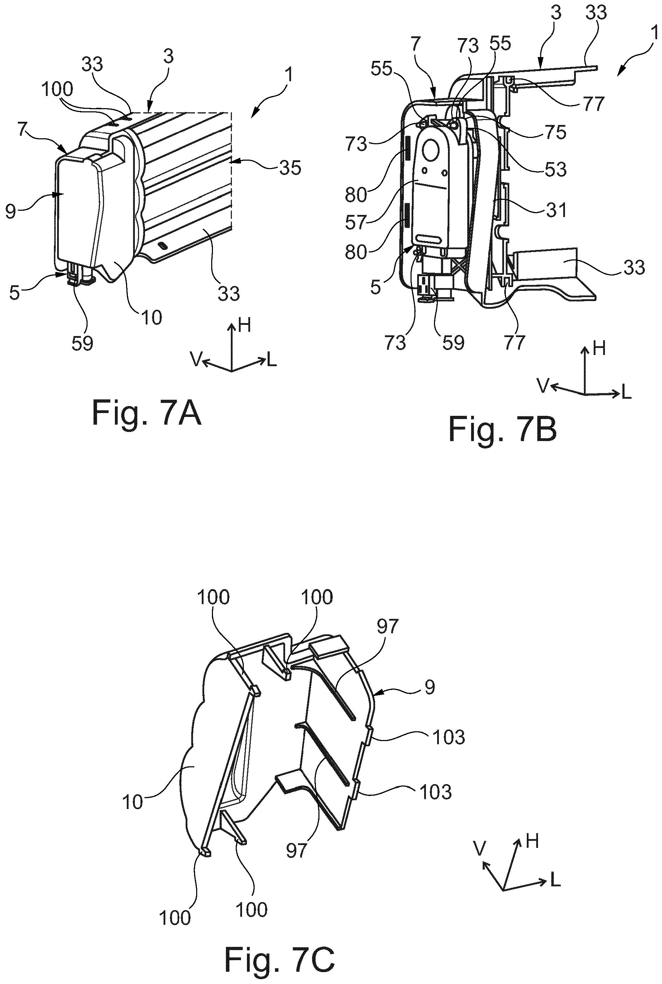

En référence aux figures 6A à 7C, il est représenté une deuxième (figures 6A à 6C) et une troisième (figures 7A à 7C) variantes du dispositif d'obturation 1. Selon ces deuxième et troisième variantes, l'ouverture du logement 7 est disposée dans le prolongement des traverses d'extrémité 33 et s'étend selon les axes L et V du trièdre. Selon ces deuxième et troisième variantes, le capot 9 présente une extension 10 s'étendant parallèlement à l'axe longitudinal des traverses d'extrémité 33 à l'état fixé du capot 9 sur le logement 7. L'extension 10 est destinée à venir au contact de paliers permettant la fixation de l'au moins un ensemble de volets 35.

Selon ces deuxième et troisième variantes, l'actionneur 5 est disposé sur un montant latéral 31 du cadre support 3. D'autre part, l'encliquetage du capot 9 sur l'ouverture du logement 7 se fait selon une direction perpendiculaire aux éléments de positionnement 73, et de préférence perpendiculairement au plan défini par le cadre support 3, c'est-à-dire selon l'axe V du trièdre.

En référence aux figures 6A et 7A, la fiche de connexion 59 de l'actionneur 5 fait saillie du logement 7 et du capot 9 à l'état assemblé de ces deux éléments afin de permettre le raccordement de l'actionneur 5 à l'unité de contrôle.

En référence aux figures 6B et 7B, le logement 7 présente trois éléments de positionnement 73 présentant chacun une butée 75. Par ailleurs, l'actionneur 5 présente trois orifices de fixation 51 coopérant avec les éléments de positionnement 73.

Le logement 7 présente également des ouvertures 77 configurées pour coopérer avec les formes complémentaires 100 portées par l'extension 10 du capot 9 (visibles sur les figures 6C et 7C) afin d'assurer la fixation du capot 9 sur le logement 7 par encliquetage. Par ailleurs, le logement 7 présente de manière optionnelle des ouvertures de positionnement 80 du capot 9. Les ouvertures de positionnement 80 sont destinées à coopérer avec des pions de positionnement 103 disposés sur le capot 9 afin de guider le capot 9 de manière à faciliter son encliquetage avec le logement 7 et de renforcer sa coopération avec le logement 7.

En référence aux figures 6C et 7C, l'au moins une forme spécifique correspond à une nervure 97 venant contre la face externe 57 de l'actionneur 5 disposée en regard du capot 9 à l'état monté du capot 9 sur l'ouverture du logement 7 de sorte à plaquer l'actionneur 5 dans le logement 7 lors de l'encliquetage du capot 9. Selon les modes de réalisation particuliers représentés ici, le capot 9 présente deux nervures 97 destinées à coopérer avec l'actionneur 5 afin de plaquer celui-ci dans le logement 7. Selon ces modes de réalisation particulier, les nervures 97 sont disposées sur le capot 9 de manière à venir appuyer sur une partie supérieure de l'actionneur 5 pour l'une des nervures 97 et sur une partie inférieure de l'actionneur 5 pour l'autre nervure 97. Selon une alternative non représentée ici, le capot 9 peut présenter une seule nervure 97 disposée sur le capot 9 de manière à venir appuyer au milieu de l'actionneur 5 lors de l'encliquetage du capot 9 sur l'ouverture du logement 7.

Selon la deuxième variante représentée en référence aux figures 6A à 6C, le logement 7 présente deux ouvertures 77 sur chaque traverse d'extrémité 33 destinées à coopérer avec les formes complémentaires 100 portées par l'extension 10 du capot 9. Selon le mode de réalisation particulier de la figure 6C, les formes complémentaires 100 sont disposées sur des bras 102. Avantageusement, la disposition au niveau de la face avant du cadre support 3 du capot 9 permet un accès facile à ce capot 9 et peut permettre un démontage rapide de ce capot 9 permettant par exemple un remplacement rapide de l'actionneur 5 si nécessaire. Par ailleurs, le flux d'air en fonctionnement du véhicule automobile peut plaquer le capot 9 contre le cadre support 3 et plus particulièrement sur le logement 7, prévenant ainsi une désolidarisation éventuelle du capot 9 et du logement 7.

Selon cette deuxième variante, et en référence à la figure 6C, les nervures 97 sont planes. Ainsi, l'actionneur 5 est plaqué contre les butées 75 portées par les éléments de positionnement 73 avant que le capot 9 soit encliqueté avec le logement 7.

En référence à la figure 6C, l'extension 10 du capot 9 présente de manière optionnelle des joues 99 semi-sphériques, également appelées clamp, destinées à venir recouvrir une partie extrémale des volets afin de former une barrière de protection permettant de limiter les quantités de poussières et de débris qui peuvent arriver au niveau de cette partie extrémale des volets. Avantageusement, la présence de ces joues 99 permet de prévenir certains dysfonctionnements du dispositif d'obturation 1 en prévenant le dépôt de poussières au niveau des extrémités des volets permettant le pivotement de ces derniers.

Selon la troisième variante représentée en référence aux figures 7A à 7C, les nervures 97 (visibles sur la figure 7C) sont chanfreinées de manière à appuyer sur l'actionneur 5 pour le plaquer dans le logement 7 en fin de course du capot 9 lors de l'encliquetage du capot 9 et de son extension 10 sur l'ouverture du logement 7. Avantageusement, une telle forme des nervures 97 permet de limiter les efforts exercés sur les éléments de positionnement 73 lors du positionnement du capot 9 sur l'ouverture du logement 7. En effet, le capot 9, et plus précisément l'au moins une nervure 97 correspondant à la forme spécifique, dans une telle configuration est en contact avec l'actionneur 5 uniquement lorsqu'il est encliqueté dans le logement 7.

Par ailleurs, selon cette troisième variante, l'actionneur 5 est disposé au niveau de la face arrière du cadre support 3. Afin de renforcer la coopération du capot 9 avec le logement 7, les formes complémentaires 100 portées par le capot 9 peuvent être réalisées en un matériau hyper-rigide. Ainsi l'encliquetage du capot 9 avec le logement 7 se fait en jouant sur la souplesse du cadre support 3, ce qui permet d'améliorer la résistance au vent de l'ensemble composé du capot 9 et du logement 7. Avantageusement, cette amélioration de la résistance au vent permet de positionner le logement 7, et donc l'actionneur 5, sur la face arrière du cadre support 3.

Selon une alternative non représentée de cette troisième variante, le logement 7 peut être disposé au niveau de la face avant du cadre support 3.

La présente invention a également pour objet un procédé de fabrication du dispositif d'obturation 1 décrit en référence aux figures 2 à 7C. Le cadre support 3 est généralement obtenu par moulage par injection. Comme énoncé précédemment, le logement 7 est moulé avec le cadre support 3 afin de limiter les zones de fragilité formées par les jointures.

Le procédé comprend une étape d'installation de l'actionneur 5 muni du levier dans le logement 7. Cette étape d'installation se fait par coopération des orifices de fixation 51 de l'actionneur 5 avec les éléments de positionnement 73. Le levier est ensuite raccordé à l'organe de commande afin de former l'élément de commande permettant le pivotement des volets entre leur position ouverte et leur position d'obturation.

Le procédé comprend ensuite une étape d'installation des volets composant l'au moins un ensemble de volets 35 à l'intérieur du cadre support 3.

Le procédé met ensuite en œuvre une étape de raccordement de ces volets à l'organe de commande afin de permettre leur pivotement entre leur position d'obturation et leur position ouverte sous l'effet de l'actionneur 5.

Le procédé comprend ensuite une étape de blocage de l'actionneur 5 à l'intérieur du logement 7 par fixation du capot 9 par encliquetage sur l'ouverture du logement 7.

Les exemples de réalisation développés ci-dessus sont des exemples fournis à titre illustratif et non limitatif. En effet, il est tout à fait possible pour l'homme de l'art de modifier le nombre d'orifices de fixation 51 de l'actionneur 5 ainsi que le nombre d'éléments de positionnement 73 disposés dans le logement 7 sans sortir du cadre de la présente invention. Ensuite, l'homme de l'art pourra utiliser tout autre procédé de fabrication du cadre support 3 qu'un procédé de moulage par injection, comme par exemple une impression 3D, sans sortir du cadre de la présente invention.

Ainsi, l'obtention d'un dispositif d'obturation 1 dont le coût et le temps de fabrication sont améliorés est possible grâce au dispositif d'obturation 1 dans lequel l'actionneur 5 est maintenu fixe à l'intérieur du logement 7 grâce aux éléments de positionnement 73 et à l'encliquetage du capot 9, permettant ainsi de s'affranchir de l'utilisation de vis de fixation pour maintenir l'actionneur 5 fixe à l'intérieur du logement 7 tel que décrit ci-dessus.

## Revendications

1. Dispositif d'obturation (1) d'entrée d'air de face avant de véhicule automobile comprenant :
• un cadre support (3) présentant deux montants latéraux (31) reliés entre eux par deux traverses d'extrémité (33) et dans lequel est installé au moins un ensemble de volets (35) pivotants entre une position d'obturation et une position ouverte,
• au moins un élément de commande configuré pour piloter le positionnement des volets, ledit au moins un élément de commande comportant au moins un organe de commande relié aux volets, un actionneur (5) présentant des orifices de fixation (51), et un levier relié d'une part à l'actionneur (5) et d'autre part à l'organe de commande de manière à permettre le pivotement des volets,
• un logement (7) disposé sur le cadre support (3) configuré pour recevoir l'actionneur (5), ledit logement (7) présentant une ouverture, et
• un capot (9) venant recouvrir l'ouverture du logement (7) et étant configuré pour être fixé sur le logement (7),
le logement (7) présentant des éléments de positionnement (73), destinés à s'insérer dans les orifices de fixation (51), chaque élément de positionnement (73) présentant une première extrémité (73a) reliée au logement (7) et une deuxième extrémité (73b) libre configurée pour coopérer avec l'orifice de fixation (51) de l'actionneur (5), et en ce que le capot (9) présente au moins une forme spécifique (93, 97) configurée pour maintenir fixe l'actionneur (5) par rapport à la première extrémité (73a) des éléments de positionnement (73) lors de la fixation du capot (9) sur le logement (7), **caractérisé en ce que** le logement (7) est disposé sur un montant latéral (31) et s'étend parallèlement à l'axe des traverses d'extrémité (33).

2. Dispositif d'obturation (1) selon l'une quelconque des revendications précédentes, **caractérisé en ce que** les éléments de positionnement (73) correspondent à des doigts présentant une butée (75) configurée pour servir d'appui à une première surface (53) de l'orifice de fixation (51) de l'actionneur (5).

3. Dispositif d'obturation (1) selon l'une quelconque des revendications précédentes, **caractérisé en ce que** le positionnement du capot (9) sur l'ouverture du logement (7) en vue de sa fixation se fait selon une direction parallèle aux éléments de positionnement (73).

4. Dispositif d'obturation (1) selon la revendication 3, **caractérisé en ce que** l'au moins une forme spécifique correspond à un orifice borgne (93) configuré pour accueillir la deuxième extrémité (73b) d'un élément de positionnement (73), le capot (9) comportant autant d'orifices borgnes (93) que le logement (7) présente d'éléments de positionnement (73).

5. Dispositif d'obturation (1) selon la revendication 4 prise en combinaison avec la revendication 4, **caractérisé en ce que** l'orifice borgne (93) présente une extrémité libre (93a) coopérant avec une deuxième surface (55) de l'orifice de fixation (51), ladite deuxième surface (55) étant opposée à la première surface (53), de manière à ce que la première surface (53) de l'orifice de fixation (51) vienne au contact de la butée (75) lors de la fixation du capot (9) sur l'ouverture du logement (7).

6. Dispositif d'obturation (1) selon l'une quelconque des revendications 1 à 2, **caractérisé en ce que** le positionnement du capot (9) sur l'ouverture du logement (7) en vue de sa fixation se fait selon une direction perpendiculaire aux éléments de positionnement (73), et de préférence perpendiculairement au plan défini par le cadre support (3).

7. Dispositif d'obturation (1) selon l'une des revendications 5 ou 8, **caractérisé en ce que** l'au moins une forme spécifique correspond à une nervure (97) venant contre une face externe (57) de l'actionneur (5) disposée en regard du capot (9) à l'état monté du capot (9) sur l'ouverture du logement (7) de sorte à plaquer l'actionneur (5) dans le logement (7) lors de la fixation du capot (9) sur l'ouverture du logement (7).

8. Procédé de fabrication d'un dispositif d'obturation (1) selon l'une quelconque des revendications précédentes, **caractérisé en ce qu'**il comprend les étapes suivantes :
• installation de l'actionneur (5) muni du levier dans le logement (7) par coopération des orifices de fixation (51) de l'actionneur (5) avec les éléments de positionnement (73), et
• blocage de l'actionneur (5) à l'intérieur du logement (7) par fixation du capot (9) sur l'ouverture du logement (7).

## Patentansprüche

1. Verschlussvorrichtung (1) eines vorderen Lufteinlasses eines Kraftfahrzeugs, umfassend:
• einen Tragrahmen (3), der zwei Seitenstreben (31) aufweist, die durch zwei Endquerträger (33) miteinander verbunden sind, und in dem mindestens eine Anordnung von Klappen (35) eingebaut ist, die zwischen einer Verschlussposition und einer geöffneten Position schwenkbar sind,
• mindestens ein Steuerelement, das dafür ausgelegt ist, die Positionierung der Klappen zu steuern, wobei das mindestens eine Steuerelement mindestens ein mit den Klappen verbundenes Steuerorgan, einen Stellantrieb (5), der Befestigungsöffnungen (51) aufweist, und einen Hebel, der einerseits mit dem Stellantrieb (5) und andererseits mit dem Steuerorgan so verbunden ist, dass er die Schwenkung der Klappen ermöglicht, umfasst,
• eine auf dem Tragrahmen (3) angeordnete Aufnahme (7), die dafür ausgelegt ist, den Stellantrieb (5) aufzunehmen, wobei die Aufnahme (7) eine Öffnung aufweist, und
• eine Haube (9), welche die Öffnung der Aufnahme (7) bedeckt und dafür ausgelegt ist, auf der Aufnahme (7) befestigt zu werden,
wobei die Aufnahme (7) Positionierelemente (73) aufweist, die dazu bestimmt sind, in die Befestigungsöffnungen (51) eingesetzt zu werden, wobei jedes Positionierelement (73) ein mit der Aufnahme (7) verbundenes erstes Ende (73a) und ein freies zweites Ende (73b), das dafür ausgelegt ist, mit der Befestigungsöffnung (51) des Stellantriebs (5) zusammenzuwirken, aufweist, und wobei die Haube (9) mindestens eine spezielle Form (93, 97) aufweist, die dafür ausgelegt ist, den Stellantrieb (5) während der Befestigung der Haube (9) auf der Aufnahme (7) ortsfest bezüglich des ersten Endes (73a) der Positionierelemente (73) zu halten, **dadurch gekennzeichnet, dass** die Aufnahme (7) an einer Seitenstrebe (31) angeordnet ist und sich parallel zur Achse der Endquerträger (33) erstreckt.

2. Verschlussvorrichtung (1) nach einem der vorhergehenden Ansprüche, **dadurch gekennzeichnet, dass** die Positionierelemente (73) Fingern entsprechen, die einen Anschlag (75) aufweisen, der dafür ausgelegt ist, als Abstützung einer ersten Fläche (53) der Befestigungsöffnung (51) des Stellantriebs (5) zu dienen.

3. Verschlussvorrichtung (1) nach einem der vorhergehenden Ansprüche, **dadurch gekennzeichnet, dass** die Positionierung der Haube (9) auf der Öffnung der Aufnahme (7) zwecks ihrer Befestigung in einer zu den Positionierelementen (73) parallelen Richtung erfolgt.

4. Verschlussvorrichtung (1) nach Anspruch 3, **dadurch gekennzeichnet, dass** die mindestens eine spezielle Form einem Sackloch (93) entspricht, das dafür ausgelegt ist, das zweite Ende (73b) eines Positionierelements (73) aufzunehmen, wobei die Haube (9) so viele Sacklöcher (93) umfasst, wie die Aufnahme (7) Positionierelemente (73) aufweist.

5. Verschlussvorrichtung (1) nach Anspruch 4 in Kombination mit Anspruch 2, **dadurch gekennzeichnet, dass** das Sackloch (93) ein freies Ende (93a) aufweist, das mit einer zweiten Fläche (55) der Befestigungsöffnung (51) zusammenwirkt, wobei die zweite Fläche (55) der ersten Fläche (53) gegenüberliegt, so dass die erste Fläche (53) der Befestigungsöffnung (51) bei der Befestigung der Haube (9) auf der Öffnung der Aufnahme (7) mit dem Anschlag (75) in Kontakt kommt.

6. Verschlussvorrichtung (1) nach einem der Ansprüche 1 bis 2, **dadurch gekennzeichnet, dass** die Positionierung der Haube (9) auf der Öffnung der Aufnahme (7) zwecks ihrer Befestigung in einer Richtung erfolgt, die zu den Positionierelementen (73) senkrecht ist und vorzugsweise zu der durch den Tragrahmen (3) definierten Ebene senkrecht ist.

7. Verschlussvorrichtung (1) nach einem der Ansprüche 5 oder 8, **dadurch gekennzeichnet, dass** die mindestens eine spezielle Form einer Rippe (97) entspricht, die im auf der Öffnung der Aufnahme (7) angebrachten Zustand der Haube (9) an einer gegenüber der Haube (9) angeordneten Außenseite (57) des Stellantriebs (5) zur Anlage kommt, so dass sie bei der Befestigung der Haube (9) auf der Öffnung der Aufnahme (7) den Stellantrieb (5) in die Aufnahme (7) presst.

8. Verfahren zur Herstellung einer Verschlussvorrichtung (1) nach einem der vorhergehenden Ansprüche, **dadurch gekennzeichnet, dass** es die folgenden Schritte umfasst:
• Einbau des mit dem Hebel ausgestatteten Stellantriebs (5) in die Aufnahme (7) durch Zusammenwirken der Befestigungsöffnungen (51) des Stellantriebs (5) mit den Positionierelementen (73) und
• Blockieren des Stellantriebs (5) im Inneren der Aufnahme (7) durch Befestigung der Haube (9) auf der Öffnung der Aufnahme (7).

## Claims

1. Device (1) for closing an air intake of a motor vehicle front end, comprising:
• a support frame (3) having two lateral uprights (31) interconnected by two end crossmembers (33) and in which at least one set of slats (35) pivotable between a closing position and an open position is installed,
• at least one control element configured to control the positioning of the slats, said at least one control element including at least one control member connected to the slats, an actuator (5) having fixing holes (51), and a lever connected firstly to the actuator (5) and secondly to the control member so as to enable pivoting of the slats,
• a housing (7) disposed on the support frame (3) configured to receive the actuator (5), said housing (7) having an opening, and
• a cap (9) that comes to cover the opening of the housing (7) and that is configured to be fixed to the housing (7),
the housing (7) having locating elements (73) intended to be inserted into the fixing holes (51), each locating element (73) having a first end (73a) connected to the housing (7) and a second, free end (73b) configured to cooperate with the fixing hole (51) of the actuator (5), and the cap (9) having at least one specific shape (93, 97) configured to keep the actuator (5) fixed relative to the first end (73a) of the locating elements (73) when fixing the cap (9) onto the housing (7), **characterized in that** the housing (7) is disposed on a lateral upright (31) and extends parallel to the axis of the end crossmembers (33).

2. Closing device (1) according to any one of the preceding claims, **characterized in that** the locating elements (73) correspond to fingers having an abutment (75) configured to serve as a bearing surface for a first surface (53) of the fixing hole (51) of the actuator (5).

3. Closing device (1) according to any one of the preceding claims, **characterized in that** the positioning of the cap (9) over the opening of the housing (7) in order to fix it is effected in a direction parallel to the locating elements (73).

4. Closing device (1) according to Claim 3, **characterized in that** the at least one specific shape corresponds to a blind hole (93) configured to accommodate the second end (73b) of a locating element (73), the cap (9) including as many blind holes (93) as the housing (7) has locating elements (73).

5. Closing device (1) according to Claim 4 taken in combination with Claim 2, **characterized in that** the blind hole (93) has a free end (93a) cooperating with a second surface (55) of the fixing hole (51), said second surface (55) being opposite the first surface (53), so that the first surface (53) of the fixing hole (51) comes into contact with the abutment (75) when fixing the cap (9) over the opening of the housing (7).

6. Closing device (1) according to either one of Claims 1 and 2, **characterized in that** the positioning of the cap (9) over the opening of the housing (7) in order to fix it is effected in a direction perpendicular to the locating elements (73), and preferably perpendicularly to the plane defined by the support frame (3).

7. Closing device (1) according to one of Claims 5 and 8, **characterized in that** the at least one specific shape corresponds to a rib (97) coming up against an external face (57) of the actuator (5) facing the cap (9) when the cap (9) is mounted over the opening of the housing (7) so as to press the actuator (5) into the housing (7) when fixing the cap (9) over the opening of the housing (7).

8. Method for manufacturing a closing device (1) according to any one of the preceding claims, **characterized in that** it comprises the following steps:
• installing the actuator (5) fitted with the lever in the housing (7) by cooperation of the fixing holes (51) of the actuator (5) with the locating elements (73), and
• locking the actuator (5) in the housing (7) by fixing the cap (9) over the opening of the housing (7).
